# EUROPEAN PATENT SPECIFICATION

(11) **EP 3 620 078 B1**
(45) Date of publication and mention of the grant of the patent: **20.10.2021**
(21) Application number: 19195293.6
(22) Date of filing: 04.09.2019
(51) Int. Cl.: A47B 3/08

(54) **FOLDING TABLE**
KLAPPTISCH
TABLE PLIABLE

(30) Priority: 06.09.2018 AU 2018903319
(43) Date of publication of application: 11.03.2020
(73) Proprietor: IHS Global Design Pty Ltd, Melbourne, Victoria 3000 (AU)
(72) Inventor: POLIDOROS, Nicholas, Melbourne, Victoria 3000 (AU)
(74) Representative: Gille Hrabal Partnerschaftsgesellschaft mbB Patentanwälte

(56) References cited:
- EP-A1- 2 030 526
- US-A1- 2013 205 503
- US-A1- 2018 098 625

## Description

### Field of the invention

The present invention relates to a folding table, and more particularly to a folding table that is able to be rolled along the floor.

### Background of the invention

It is desirable in large venues, such as conference centres, hotels and meeting halls, for tables to be able to be brought out from storage and arranged for a particular event, taking into consideration the number of people and the needs of the event.

For this reason, a number of different folding table configurations have been developed. The most common folding table has metal legs that are hinged to the underside of a table top. The legs fold underneath the table top and the folded tables are carried and stacked for storage.

Another type of foldable table has an underlying frame that includes wheels to allow rolling of the table. The table top may have a central split line that is hinged, so that the table top folds down around the frame to reduce with allowing tables to be stored next to each other in a smaller space. However, these types of tables still take up a large amount of storage space, as it is only as small as the width of the frame and wheel assembly.

There are other types where the frame may also hinge allowing the width to be reduced. However, these arrangements present a very undesirable visual presence, requiring the tables to be covered with a tablecloth to conceal the split line. The split line also can cause unevenness in the top surface if the two halves no longer align correctly.

Another known solution is to provide wheels on the underside of the table top. When the legs are folded underneath, the table can be tilted slightly and the table can be rolled to storage. However, this can compromise visual appearance as the wheels are exposed during use. They can also compromise storage, as they project perpendicularly from the table top under surface, increasing the depth of the folded table.
US 2013/205503 A1 discloses a folding table that is able to be rolled along the floor.

It is therefore desirable to provide a foldable table that offers an alternative to the current systems.

Reference to any prior art in the specification is not an acknowledgment or suggestion that this prior art forms part of the common general knowledge in any jurisdiction or that this prior art could reasonably be expected to be understood, regarded as relevant, and/or combined with other pieces of prior art by a skilled person in the art.

### Summary of the invention

Accordingly, the present invention provides a folding table, including:
a table top having a top surface and a bottom surface;
two opposing legs at or adjacent respective opposing ends of the table top; the legs being movable between an unfolded position for supporting the table top above a floor surface, and a folded position whereby the legs lie underneath the bottom surface;
at least one roller device located towards an end of the table top;
whereby in the unfolded position the roller is concealed behind the table top and leg, and in the folded position the roller is exposed to the end of the table top to allow rolling of the table in a tilted orientation along a floor surface.

The top surface of the table top is preferably generally planar. The legs are preferably panels extending in width the same as the depth of the table top and may have an exterior that is generally planar. The table top and leg may meet at a mitre joint. It will appreciated that alternative joints may be utilised.

The underside of the table top at one or both ends has cut out portions. The upper ends of the respective leg or legs have cut out portions. The cut out portions preferably do not extend the full width of the table top, such they are not visible from the sides or ends. The cut out portions may correspond to form a pocket on the inside of the corner when in the unfolded position. The pocket may be sized to receive a roller device. There may be: a single roller device at only one end; a single roller device at each end; multiple roller devices at one end; or multiple roller devices at each end.

The legs and table top are preferably connected by a standard corner hinge connection, having a first bracket on the table top and a second bracket on the leg, with a central pivot. The roller device may be connected to a scissor link hinge. The ends of the arms at one end being commonly connected to the roller device, and the ends of the arms at the other end being split and respectively attached to the corner hinge first and second brackets. As the leg is folded, the scissor link hinge extends the roller outwardly from and between the table top end and the upper end of the leg. As the leg is unfolded, the brackets move apart, drawing the ends of the scissor arms outwards and drawing the roller device inwards to sit within the pocket.

Advantageously, the scissor arms have different lengths such that they position the roller device downwards away from the table top.

### Brief description of the drawings

Further aspects of the present invention and further embodiments of the aspects described in the preceding paragraphs will become apparent from the following description, given by way of example and with reference to the accompanying drawings, in which:
FIGURE 1 is a perspective view of a foldable table according to a first embodiment, in the unfolded position;
FIGURE 2 is a perspective view of the foldable table as the legs are being folded;
FIGURE 3 is a side view of the table as shown in FIGURE 2;
FIGURE 4 is a top perspective view of the foldable table in the folded position;
FIGURE 5 is a bottom perspective view of the table as shown in FIGURE 4;
FIGURE 6 is a side view of the table as shown in FIGURE 4;
FIGURE 7 is a bottom perspective view of the table in the unfolded position;
FIGURE 8 is a side cross-sectional view of the corner of an unfolded table;
FIGURE 9 is a side cross-sectional view of the corner of a folded table;
FIGURE 10 is a perspective view of a stack of folded tables on a storage trolley; and
FIGURE 11 is a pictorial representation of a person setting up a table according to the invention.

### Detailed description of the embodiments

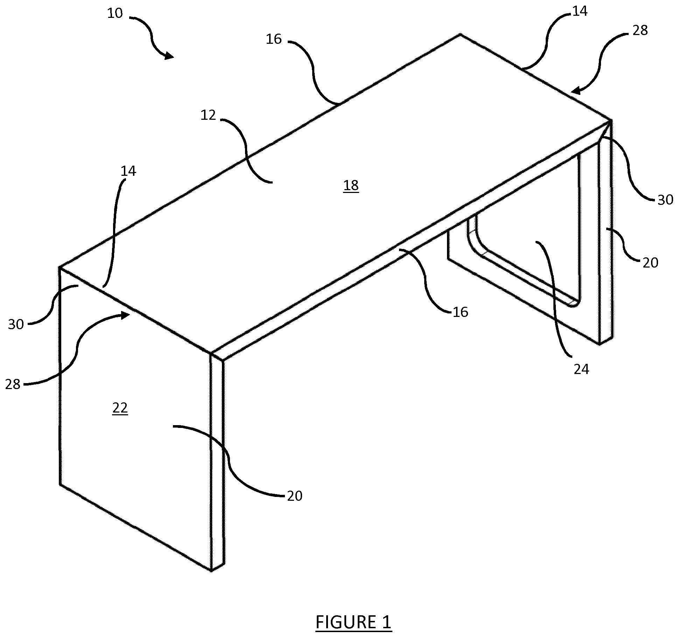

FIGURE 1 shows a table according to an embodiment of the present invention. The table 10 is positioned as it would be used for an event and have a table top 12, which is an elongate rectangular panel have two opposing ends 14 and opposing longitudinal sides 16. It will be appreciated that the present invention is applicable to table tops of any size and shape, although at least one end is generally straight. The table top has a generally planar top surface 18.

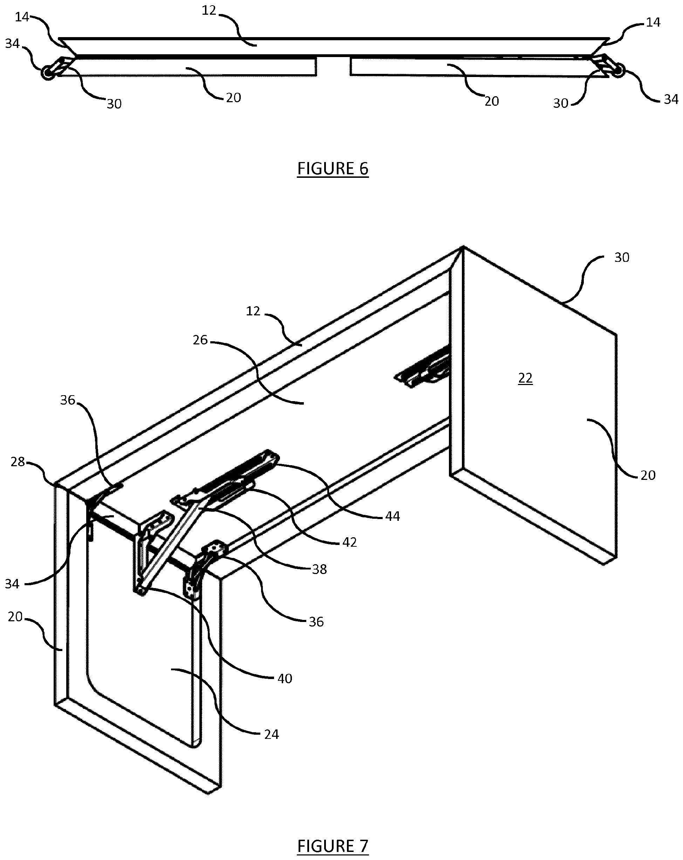

At each end 14 of the table top 12 there is a downwardly depending leg 20. In the embodiment shown the legs 20 are rectangular panels having the same width between sides as the depth of the table top. The outer surfaces 22 of the legs 20 are generally planar. The thickness of the leg panels are also the same as the table top 12, such that a uniform, somewhat seamless appearance is provided by the table. Such a presentation means that table clothes are not required to cover the tables, as the tables are aesthetically pleasing. There is a recessed portion 24 on the inside of the legs 20 in order to reduce the weight of the legs and the overall assembly. Similarly, the underside of the table top has a recessed portion 26 to reduce weight (as shown in FIGURE 7).

It can be seen from FIGURE 1 that the only visible seams or mechanisms are the corner joints 28 at the junction between the table top ends 14 and the upper ends 30 of the legs 20.

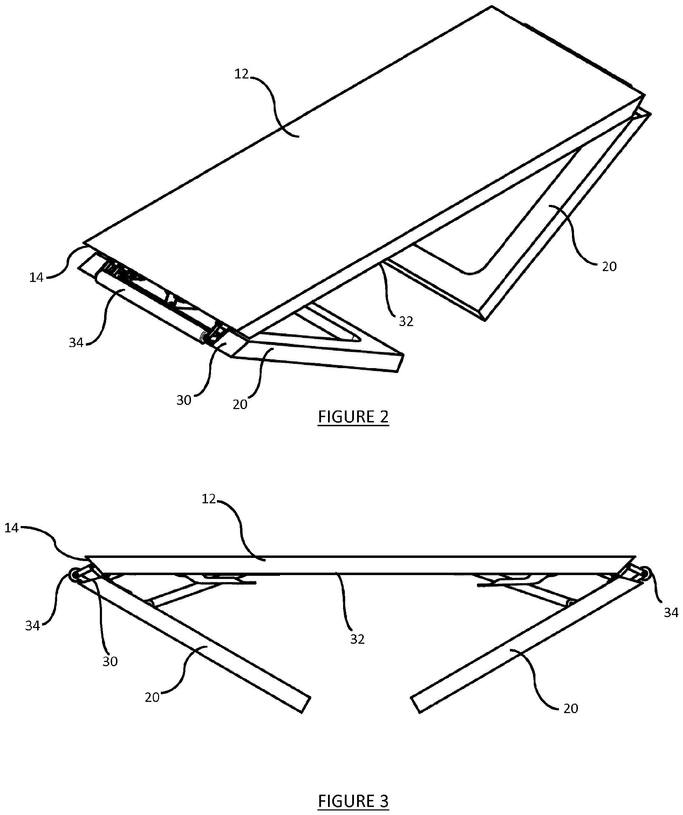

FIGURES 2 and 3 show how the table 10 is folded for transport and storage. Both of the legs 20 are folded inwardly toward the underside 32 of the table top 12. It can be seen from these drawings that the corner joints 28 are mitre joints, whereby the end 14 of the table and the upper end 30 of the legs are cut at 45°, such that when the legs are folded, the corners open up, as shown in FIGURE 3.

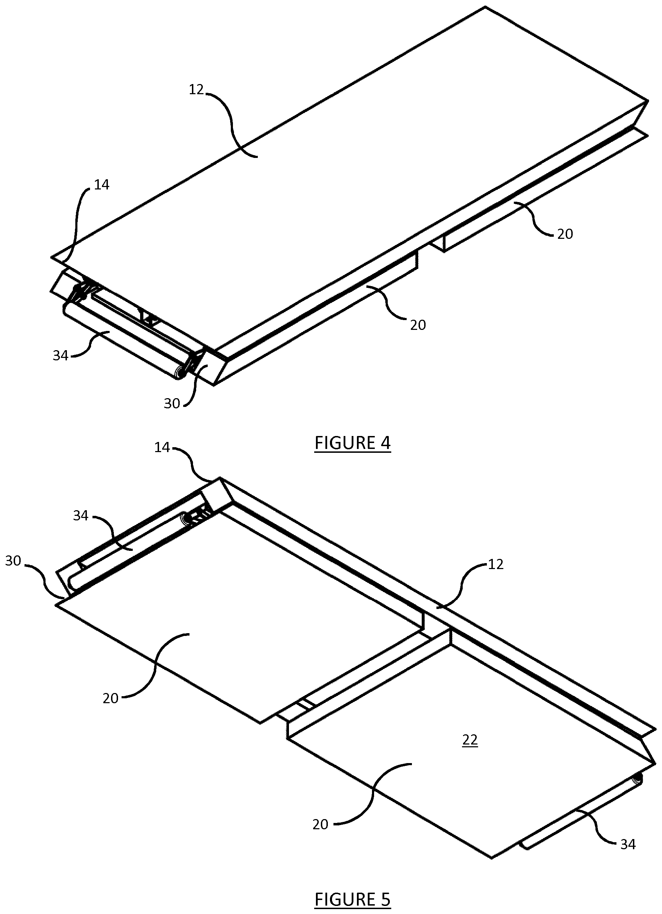

FIGURES 4 and 5 show the table 12 in the folded position, with the legs 20 lying underneath and generally parallel to the table top. This provides a flat upper and lower surface when folded allowing for easy and efficient stacking.

As can be seen best in FIGURE 4, when the table 10 is in the folded position, a roller device 34 protrudes from the end. It will be appreciate that the drawings show a single roller device at each end, although one may be provided at only one end. The roller device allows the table to be tilted upwards enabling the folded table to be wheeled along the floor surface to rearrange or move to storage. The benefit of having tables with rollers means that handling can be achieved by a single person. The roller at the end that is lifted can be used as a handle by the operator to manoeuvre the table while rolling.

A single roller 34 is shown at each end of the table top, however it will be appreciated that more than one spaced apart roller may be used, although it is desirable that they share a common axle.

The legs 20 are connected to the table top 12 using standard mitre joint corner hinges 36. Two hinges 36 are provided, one towards each side 16 of the table top 12. A stabilising strut 38 is used in the centre at each end, with a first end 40 being pivotally connected to the leg 20 and a second end 42 being slidable connected to a rail 44 on the underside of the table top. As the leg 20 is folded, the second end 42 slides along the rail 44 towards the centre of the table top, as can be seen in FIGURE 7. This is a standard stabilising system for folding tables.

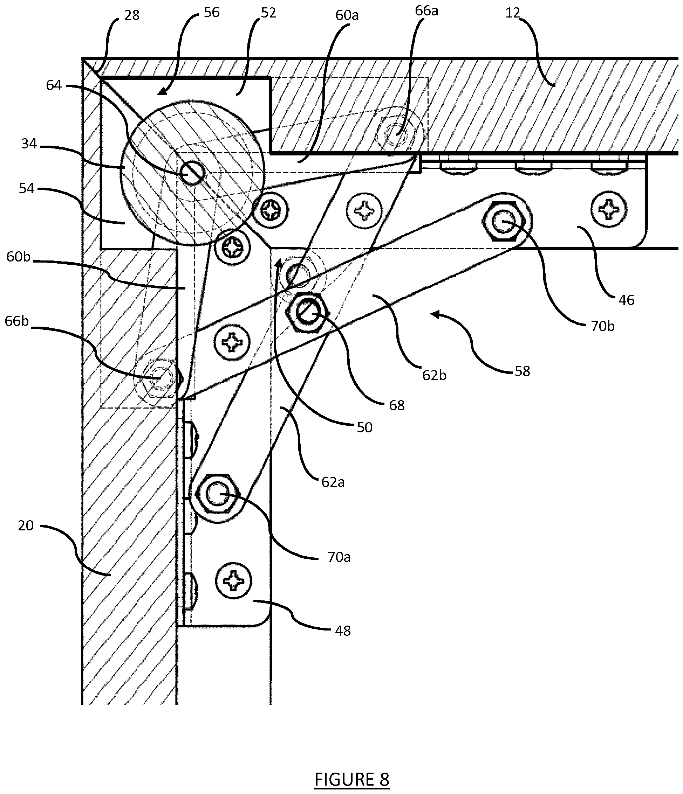

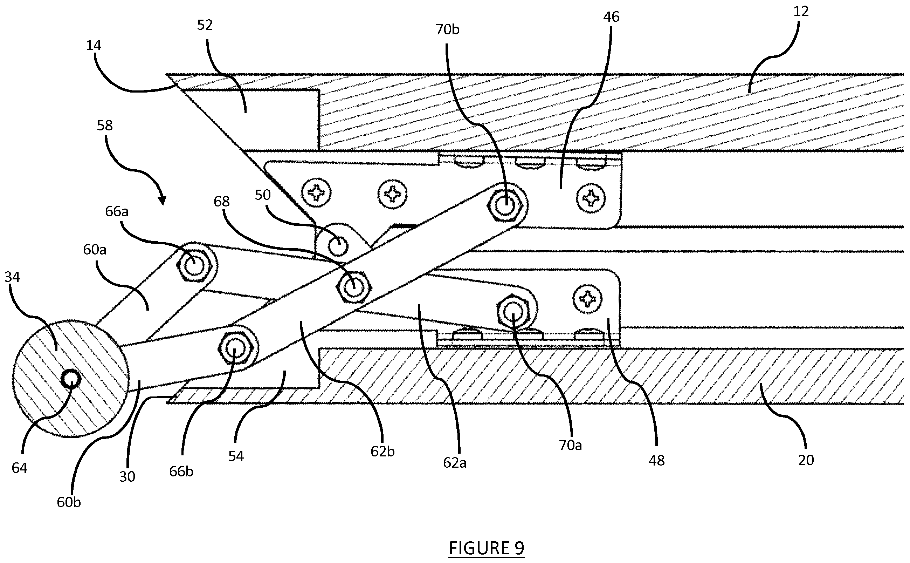

Referring to FIGURES 8 and 9, the standard mitre joint corner hinge 36 includes a first bracket 46 connected to the underside of the table top. A second bracket 48 is connected to the leg 20 and the two brackets 46, 48 are joined together by central pivot 50.

Adjacent the ends of the hinge 36, at the end 14 of the table top and the upper end 30 of the leg, there are cut out portions 52, 54. The cut out portions 52, 54 together form a pocket 56 into which the roller 34 is partially or fully received when the leg is unfolded, as shown in FIGURE 8. The pocket does not extend the full depth of the table. As shown in FIGURE 7, the pocket and roller 34 only extend the width of the recessed portions 24, 26, so that the roller and brackets are concealed within the unfolded table.

The roller 34 is connected at each end to a scissor link hinge 58. The scissor link hinge 58 is constructed from four arms, two shorter arms 60a, 60b and two longer arms 62a, 62b. The outer ends of the shorter arms 60, 60b pivotally join at roller axle 64. The shorter arms connect to the longer arms at pivot points 66a, 66b. The longer arms 62a, 62b cross over each other and are connected together at pivot point 68. The ends of the longer arms are then respectively joined to the first and second hinge brackets 46, 48 via pivot points 70a, 70b. These connections are such that, as the leg 20 is folded and the second bracket 48 is moved towards the first bracket 46, the end pivots 70a, 70b of the long arms 62a, 62b are moved together. This forces pivots 66a, 66b towards each other, lengthening the arms outwardly and extending the roller 34 outward from the pocket 56 between the end 14 of the table top and the end 30 of the leg, as shown in FIGURE 9.

The long arms 62a, 62b are of different lengths, with arm 62a being longer than arm 62b. The connecting pivot 68 is located half way along the length of the longer arm 62a. The pivot 68 placement on the shorter arm 62b is further towards the shorter arms. The result of this non symmetry is that as the scissor link hinge 58 extends outwardly from the pocket 56, the roller follows an arc and moved down so that it is closer to the edge 30 of the leg. When the folded table is tilted and rolled, because the roller is closer to the floor surface, the edges 14 and 30 are protected from damage and the table is not required to be lifted as high as if it extended evenly.

As the table is unfolded, the scissor link hinge 58 works in the reverse, with the first and second hinge brackets 46, 48 drawing apart. This moves the ends of the long arms 62a, 62b apart, which draws the roller inwards to sit within the pocket 56 as the corner closes.

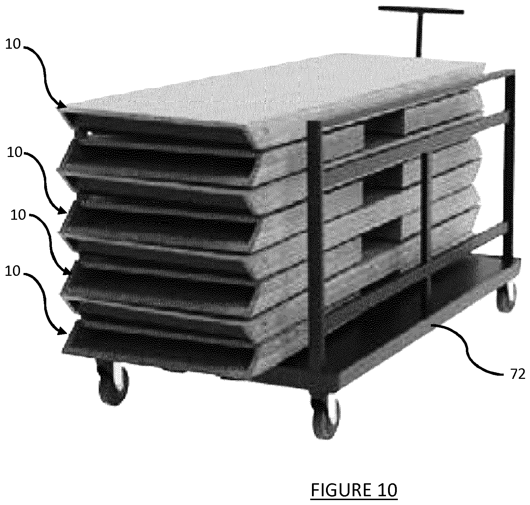

As shown in FIGURE 10, when the tables are in the folded position, the legs lie parallel to the table top, such that a planar upper and lower surface is presented. This makes stacking of multiple tables much easier than existing systems. Multiple tables can be stacked in a horizontal orientation on a trolley 72 and wheeled into storage.

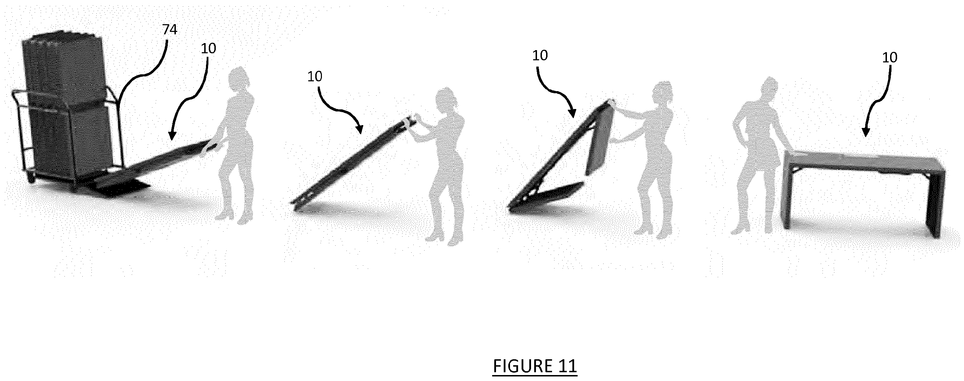

Alternatively, as shown in FIGURE 11, the tables 10 can be stacked generally vertically using an upright trolley 74. A single user can roll a table 10 off of the trolley without assistance, unfold the legs and stand the table up. The present invention provides an aesthetically pleasing rollable foldable table that conceals the rolling device when unfolded and exposes it for ease of use when folded.

It will be understood that the invention disclosed and defined in this specification extends to all alternative combinations of two or more of the individual features mentioned or evident from the text or drawings. All of these different combinations constitute various alternative aspects of the invention.

## Claims

1. A folding table (10), including:
a table top (12) having a top surface (18) and a bottom surface;
two opposing legs (20) at or adjacent respective opposing ends (14) of the table top; the legs (20) being movable between an unfolded position for supporting the table top above a floor surface, and a folded position whereby the legs lie underneath the bottom surface;
at least one roller device (34) located towards an end (14) of the table top; wherein
the underside of the table top at one or both ends has cut out portions (26),
the upper ends of the respective leg or legs have cut out portions (24),
the cut out portions on the table top and the legs do not extend the full depth of the table top such they are not visible from the sides or ends,
the cut out portion (26) at one end and a cut out portion (24) at a respective leg correspond to form a pocket (56) on the inside of the corner when in the unfolded position;
wherein the pocket (56) is sized to receive the at least one roller device, whereby in the unfolded position the roller device (34) is concealed behind the table top and leg, and in the folded position the roller is exposed to the end of the table top to allow rolling of the table in a tilted orientation along a floor surface.

2. A folding table according to claim 1, wherein the top surface (18) of the table top is planar.

3. A folding table according to claim 1 or 2, wherein the legs (20) are panels extending in width the same as the depth of the table top.

4. A folding table according to any preceding claim, wherein the legs (20) have an exterior that is planar.

5. A folding table according to claim 4, wherein the table top (12) and each respective leg (20) of the two opposing legs meet at a mitre joint (28).

6. A folding table according to any one of the preceding claims, wherein there is one of: a single roller device at only one end; a single roller device at each end; multiple roller devices at one end; or multiple roller devices at each end.

7. A folding table according to any one of the preceding claims, wherein the legs and table top are connected by a standard corner hinge connection (36), having a first bracket (46) on the table top and a second bracket (48) on the leg, with a central pivot (50).

8. A folding table according to claim 7, wherein the roller device is connected to a scissor link hinge (58).

9. A folding table according to claim 8, wherein the scissor link hinge (58) includes at least four hinged arms (60a, 60b, 62a, 62b), the end of the hinged arms at one end being commonly connected to the roller device, and the ends of the arms at the other end being split and respectively attached to the corner hinge first and second brackets, whereby, as the leg is folded, the scissor link hinge extends the roller device outwardly from and between the table top end and the upper end of the leg, and, as the leg is unfolded, the brackets move apart, drawing the ends of the scissor arms outwards and drawing the roller device inwards to sit within the pocket.

10. A folding table according to claim 9, wherein the scissor arms have different lengths such that they position the roller device downwards away from the table top.

## Patentansprüche

1. Ein Klapptisch (10), enthaltend:
eine Tischplatte (12) mit einer oberen Fläche (18) und einer unteren Fläche
zwei gegenüberliegende Beine (20) an oder benachbart zu jeweilig gegenüberliegenden Enden (14) der Tischplatte; wobei die Beine (20) zwischen einer ausgeklappten Position zum Tragen der Tischplatte über einer Bodenfläche und einer eingeklappten Position, in der die Beine unter der unteren Fläche liegen, bewegbar sind
mindestens eine Rollenvorrichtung (34), die in Richtung eines Endes (14) der Tischplatte angeordnet ist; wobei
die Unterseite der Tischplatte an einem oder beiden Enden ausgeschnittene Abschnitte (26) aufweist,
die oberen Enden des jeweiligen Beins oder der Beine ausgeschnittene Abschnitte (24) aufweisen,
die ausgeschnittenen Abschnitte an der Tischplatte und den Beinen sich nicht über die volle Tiefe der Tischplatte erstrecken, so dass sie von den Seiten oder Enden nicht sichtbar sind,
der ausgeschnittene Abschnitt (26) an einem Ende und ein ausgeschnittener Abschnitt (24) an einem jeweiligen Bein miteinander korrespondieren, um in der ausgeklappten Position eine Tasche (56) an der Innenseite der Ecke zu bilden;
wobei die Tasche (56) so bemessen ist, dass sie die mindestens eine Rollenvorrichtung aufnimmt, wobei in der ausgeklappten Position die Rollenvorrichtung (34) hinter der Tischplatte und dem Bein verborgen ist und in der eingeklappten Position die Rolle am Ende der Tischplatte freiliegt, um ein Rollen des Tisches in einer geneigten Ausrichtung entlang einer Bodenfläche zu ermöglichen.

2. Ein Klapptisch gemäß Anspruch 1, wobei die obere Fläche (18) der Tischplatte eben ist.

3. Ein Klapptisch gemäß Anspruch 1 oder 2, wobei die Beine (20) Platten sind, die sich in der Breite gleich weit wie die Tiefe der Tischplatte erstrecken.

4. Ein Klapptisch gemäß einem der vorhergehenden Ansprüche, wobei die Beine (20) eine Außenseite haben, die eben ist.

5. Ein Klapptisch gemäß Anspruch 4, wobei die Tischplatte (12) und jedes jeweilige Bein (20) der beiden gegenüberliegenden Beine in einer Gehrungsverbindung (28) zusammentreffen.

6. Ein Klapptisch gemäß einem der vorhergehenden Ansprüche, wobei eines der folgenden vorliegt: eine einzelne Rollenvorrichtung an nur einem Ende; eine einzelne Rollenvorrichtung an jedem Ende; mehrere Rollenvorrichtungen an einem Ende; oder mehrere Rollenvorrichtungen an jedem Ende.

7. Ein Klapptisch gemäß einem der vorhergehenden Ansprüche, wobei die Beine und die Tischplatte durch eine Standard-Eckscharnierverbindung (36) verbunden sind, die eine erste Halterung (46) an der Tischplatte und eine zweite Halterung (48) am Bein aufweist, mit einem zentralen Drehpunkt (50).

8. Ein Klapptisch gemäß Anspruch 7, wobei die Rollenvorrichtung mit einem Scherengelenk (58) verbunden ist.

9. Ein Klapptisch gemäß Anspruch 8, wobei das Scherengelenk (58) mindestens vier Gelenkarme (60a, 60b, 62a, 62b) enthält, wobei das Ende der Gelenkarme an einem Ende gemeinsam mit der Rollenvorrichtung verbunden ist und die Enden der Arme am anderen Ende geteilt und jeweils an den ersten und zweiten Halterungen des Eckscharniers befestigt sind, wodurch, wenn das Bein eingeklappt wird, das Scherengelenk die Rollenvorrichtung nach außen von und zwischen dem Tischplattenende und dem oberen Ende des Beins ausfährt, und, wenn das Bein ausgeklappt wird, sich die Halterungen auseinander bewegen, wobei sie die Enden der Scherenarme nach außen ziehen und die Rollenvorrichtung nach innen ziehen, sodass diese sich in der Tasche befindet.

10. Ein Klapptisch gemäß Anspruch 9, wobei die Scherenarme unterschiedliche Längen aufweisen, so dass sie die Rollenvorrichtung nach unten von der Tischplatte weg positionieren.

## Revendications

1. Table pliable (10) comprenant:
un dessus de table (12) ayant une surface supérieure (18) et une surface inférieure ;
deux pieds opposés (20) à ou adjacents à des extrémités opposées 814) du dessus de table ; les pieds (20) étant déplaçables entre une position dépliée pour porter le dessus de table au-dessus d'une surface du sol et une position pliée, dans laquelle les pieds se trouvent au-dessous de la surface inférieure ;
au moins un dispositif de rouleau (34) disposé vers une extrémité (14) du dessus de table ; dans lequel
la face inférieure du dessus de table à l'une extrémité ou aux deux extrémités comprend des parties découpées (26),
les extrémités supérieures du pied respectif ou des pieds respectifs comprennent des parties découpées (24),
les parties découpées du dessus de table et les pieds ne s'étendent pas complètement sur la profondeur du dessus de table, de sorte qu'elles ne sont pas visibles à partir des côtés ou des extrémités,
la partie découpée (26) à l'une extrémité et une partie découpée (24) sur un pied respectif correspondent l'une à l'autre, de sorte qu'elles forment une poche (56) à l'intérieur du coin, quand les pieds sont dans la position dépliée ;
dans lequel la poche (56) est dimensionnée pour recevoir l'au moins un dispositif de rouleau, ce qui a pour conséquence que le dispositif de rouleau (34) est caché dans la position dépliée derrière le dessus de table et le pied, et le rouleau est exposé dans la position pliée à l'une extrémité du dessus de table pour permettre de rouler la table dans une orientation basculée le long d'une surface du sol.

2. Table pliable selon la revendication 1, dans lequel la surface supérieure (18) du dessus de table est planaire.

3. Table pliable selon la revendication 1 ou la revendication 2, dans lequel les pieds (20) sont des panneaux, qui s'étendent dans une largeur, qui correspond à la profondeur du dessus de table.

4. Table pliable selon l'une quelconque des revendications précédentes, dans lequel les pieds (20) comprennent un extérieur, qui est planaire.

5. Table pliable selon la revendication 4, dans lequel le dessus de table (12) et chaque pied respectif (20) des deux pieds opposés se rencontrent à un joint en onglet (28).

6. Table pliable selon l'une quelconque des revendications précédentes, dans lequel il y a une option parmi : un seul dispositif de rouleau à seulement une extrémité ; un seul dispositif de rouleau à chaque extrémité ; plusieurs dispositifs de rouleau à l'une extrémité ; ou plusieurs dispositifs de rouleau à chaque extrémité.

7. Table pliable selon l'une quelconque des revendications précédentes, dans lequel les pieds et le dessus de table sont reliés les uns à l'autre par un lien de charnière d'angle standard (36) comprenant un premier support de charnière (46) sur le dessus de table et un deuxième support de charnière (48) sur le pied, avec un pivot central (50).

8. Table pliable selon la revendication 7, dans lequel le dispositif de rouleau est relié à une charnière de liaison en ciseaux (58).

9. Table pliable selon la revendication 8, dans lequel la charnière de liaison en ciseaux (58) comprend au moins quatre bras articulés (60a, 60b, 62a, 62b), l'extrémité des bras articulés à l'une extrémité étant généralement reliée au dispositif de rouleau et les extrémités des bras à l'autre extrémité étant divisées et chacune étant fixée au premier et au deuxième support des charnières d'angle, dans lequel si le pied est plié, la charnière de liaison en ciseaux pousse le dispositif de rouleau vers l'extérieur à partir du et entre le dessus de table et l'extrémité supérieure du pied, et si le pied est déplié, les supports s'écartent en tirant les extrémités des bras de ciseaux vers l'extérieur et en tirant le dispositif de rouleau vers l'intérieur pour se loger à l'intérieur de la poche.

10. Table pliable selon la revendication 9, dans lequel les bras de ciseaux comprennent des longueurs différentes, de sorte qu'ils positionnent le dispositif de rouleau vers le bas à l'écart du dessus de table.
